# EUROPEAN PATENT APPLICATION

(11) **EP 3 777 520 A1**
(43) Date of publication of application: **17.02.2021**
(21) Application number: 20189003.5
(22) Date of filing: 31.07.2020
(51) Int. Cl.: A01G 9/24

(54) **INDOOR AGRICULTURE SYSTEM**

(30) Priority: 12.08.2019 US 201916538444
(71) Applicant: Ezequiel Epsztein, Demián, 08912 Badalona (ES); Hess, Boaz, Rolling Hills - Palos Verdes CA 90274 (US)
(72) Inventor: Ezequiel Epsztein, Demián, 08912 Badalona (ES); Hess, Boaz, Rolling Hills - Palos Verdes CA 90274 (US)
(74) Representative: Espiell Gomez, Ignacio

(57) **Abstract**

A lighting apparatus (100) for optimizing plant growing conditions having a plurality of light sources (101, 103) arranged to transmit light through a diffusive element (105) comprised of a plurality of engraved regions (117, 119, 121, 123, 125) to alter the emitted light is disclosed. A controller (610) is in electrical communication with the plurality of light sources (101, 103) to operate the plurality of light sources (101, 103) to allow a user to control the wavelengths of light emitted therefrom.

## Description

The invention and the embodiments generally relate to agriculture systems for improving efficiency and yield in indoor plant growing operations, including improvements in grow lighting fixtures and components.

### BACKGROUND

Traditionally, controlled environmental agriculture ("CEA") has used natural sunlight, incandescent, fluorescent, high-intensity discharge (HID) lamps, and high-pressure sodium (HPS) light sources. In recent years, it has become increasingly more economical to cultivate plants under artificial lighting due to advancements in light-emitting diode ("LED") technology. CEA operations often result in extended growth cycles, increased yield, and fine-tuning of environmental variables such as light output and temperature.

Important features of plant grow lights include providing the appropriate amount of photosynthetically active radiation ("PAR") to ensure plants progress through a healthy and optimized growth cycle. PAR is considered a useful metric for measuring plant growth light fixtures. Perhaps even more useful is photosynthetic photon flux density ("PPFD") which measures the amount of light which reached the plant.

In agricultural systems, normally multiples luminaires spaced between them are used. This separation between luminaires, will inevitably lead to plant areas with more light and other plant areas with less light. This shading leads to poor plant growth in certain areas when spacing lights out too much, thus delivering nonhomogeneous product. To avoid bad this consequence, light sources are located tighter causing having more light than necessary as well as of the other problems such as heat, spacing, hvac, electricity, initial capital outlay, future capital on replacements. An agricultural system that would avoid creating shading without having to gather light sources would be interesting.
LED systems provide a highly useful technology for cultivating plants indoors due to their high-efficiency output and their highly configurable output characteristics. LED's emit light at specific wavelength bands depending upon the type of diode. In such, LED's are often comprised of a mix of different color LED's to create a particular spectrum. Further, the intensity of each diode may be easily controlled. Because of their unique characteristics, indoor plant cultivation operations have employed LED's due to their high-efficiency, low cost, safety, and ability to optimize PAR conditions.

The absorption spectra of many plants containing chlorophyll exhibit peak absorption in the wavelengths between 410-490 nanometers ("blue light") and 590-650 nanometers ("red light"). Comparatively, little light within the wavelengths between 500-570 nanometers ("green light") is absorbed by the chlorophyll, resulting in the green appearance of the photosynthetic regions of plants. For this reason, grow lights are configured to emit blue and red light.

In agricultural systems, space between LED light sources and plants is normally large. LED light sources are often comprised of a mix of different color LED's to create a particular spectrum. Because this particular spectrum is created when different color LED's are mixed through the space, enough distance between LED light source and plant is needed. To spread light over larger areas the light must be moved away from the surface of the plants. An agricultural system that would reduce the distance between the light source and the plant while creating a particular spectrum in the surface of the plants would be interesting.

LED systems in the current arts often require fans for cooling the circuit board. In large indoor growing environments, fans direct heat from the circuit boards onto nearby plants, resulting in sub-optimal environmental conditions. For this reason, heat management is of concern when managing an indoor cultivation operation wherein lights must be adequately arranged to provide sufficient light dispersion and optimize the growth of the plants.

When light sources in agricultural systems get hot many problems arise. To solve this problem, normally the light source is located far from the plant to avoid this heat demising the crop. However, an increase of distance between light source and the plant cause in increase of wattages as distance leads to lost intensity of light and a reduction of efficiency of the agricultural system as space is critical. An agricultural system that would reduce the distance between the light source and the plant while maintaining a low level of heat in the plant would be interesting.

### SUMMARY OF THE INVENTION

The embodiments described herein disclose indoor agriculture system with a novel lighting apparatus comprising a diffusive element and a plurality of light sources arranged to transmit light through a diffusive element, the diffusive element having a plurality of engraved regions at least on a first side while the light sources are proximal to at least a first end of the diffusive element (105), such that the light enters the diffusive element by the first end and exits the diffusive element preferably from the first side thanks to the engraved regions and impacts the plurality of plants positioned next to the first side.

The lighting system provides an indoor agricultural system which minimizes heat radiation produced by the light source while maximizing the homogeneity of light emitted to the plants.

In one aspect, the lighting apparatus comprises a housing with the light sources and means to fix (116) the housing (112) to the diffusive element such that the light sources are proximal to at least a first end of the diffusive element.

Due to the fact that the plurality of light sources is located a first end of the diffusive element, the evacuation of heat can be carried out more easily. In a preferred embodiment, the housing comprises means for cooling the heat produced by light sources, such that fins or one or more conduits to permit the flow of fluid therethrough. The heat extracted by the means for cooling the heat produced by light sources can be used in another element of the indoor agriculture system such as a room heater.

In another aspect, the lighting apparatus further comprises means for regulating the distance (moving elements) between the diffusive element and the plurality of plants. In a preferred embodiment, the lighting apparatus comprises a controller in electrical communication with the means for regulating the distance to change the distance between the diffusive element and the plurality of plants.

In one aspect, the lighting apparatus comprises a controller in electrical communication with the light sources to operate the light sources to produce a uniform dispersion of light spectrum.

In another aspect, the controller is further comprised of an environmental control module in operable communication with the plurality of environmental regulation systems to optimize environmental conditions in the environment.

In another aspect, a memory is in communication with the controller to store instructions operable via a processor to instruct the emission control module, the actuator control module, and the environmental control module. The memory may store a plurality of agricultural growing protocols to automate or at least partially automate the agricultural growing process.

In one aspect, the diffusive element is preferably a board made preferably by a translucent material such acrylic material, for example polymethyl methacrylate, or glass. The translucent material lets de sunlight pass through the diffuse element to the plurality of plants.

In one aspect, the distance between adjacent engraved regions of the diffusive element decreases as the distance to the closest light source increases such that the light exiting the diffusive element is similar in all the side of the diffusive element independently of the distance from the light sources. Alternatively, the engraved regions are deeper or thicker as the distance to the closest light source increases such that the light exiting the diffusive element is similar in all the side of the diffusive element independently of the distance from the light sources.

The engraved regions can be lines, holes (dots) or a combination of lines and dots. Preferably the engraves regions in form of a hole have a circular o an oval base.

In one aspect, lighting apparatus further comprises a reflective element on a second side to prevent light exit from the second side.

In one aspect, the plurality of light sources is positioned on one or more sides of the diffusive material to increase the amount of light.

In one aspect, the one or more engraved regions are arranged to transmit light through the second side of the diffusive element apart from the first side of the diffusive element.

In one aspect, a plurality of plants is positioned to receive the light transmitted through the second side of the diffusive element.

In one aspect, the engraved regions are made on the diffusive element using a thermal technique or using a mechanical technique.

In one aspect, the diffusive element can be parallel or perpendicular to the area of plants.

In one aspect, the light sources of the lighting apparatus are out of the area of the plants such that the effect of the light sources heat to the plants are diminished.

### BRIEF DESCRIPTION OF THE DRAWINGS

A complete understanding of the present embodiments and the advantages and features thereof will be more readily understood by reference to the following detailed description when considered in conjunction with the accompanying drawings wherein:
FIG. 1 illustrates a cross-section view of the lighting apparatus, according to some embodiments;
FIG. 2 illustrates a top plan view of the lighting apparatus, according to some embodiments;
FIG. 3 illustrates a schematic of the light apparatus disposed within the growing environment, according to some embodiments;
FIG. 4 illustrates a schematic of the light apparatus disposed within the growing environment, according to some embodiments;
FIG. 5 illustrates a schematic of the growing system including the lighting apparatus and the controller, according to some embodiments;
FIG. 6 illustrates a block diagram of the control system, according to some embodiments; and
FIG. 7 illustrates a perspective view of an alternative lighting apparatus, according to some embodiments.
FIG. 8 illustrates another embodiment of the lightning apparatus.
FIG. 9 illustrates another disposition of the lightning apparatus within the growing environment.
FIG. 10 illustrates the light apparatus with the housing, the means to fix the diffusive element and the means for cooling the heat from the light sources.

### DETAILED DESCRIPTION

The specific details of the single embodiment or variety of embodiments described herein are described to better understand the lighting system used in the indoor agriculture system. Any specific details of the embodiments are used for demonstration purposes only, and no unnecessary limitations or inferences are to be understood therefrom.

Before describing in detail the exemplary embodiments, it is noted that the embodiments reside primarily in combinations of components and procedures related to the system. Accordingly, the system components have been represented, where appropriate, by conventional symbols in the drawings, showing only those specific details that are pertinent to understanding the embodiments of the present disclosure so as not to obscure the disclosure with details that will be readily apparent to those of ordinary skill in the art having the benefit of the description herein.

In general, the embodiments described herein relate to an indoor agricultural lighting system configured to increase plant yields while increasing the efficiency of the lighting system. The system provides near 100% homogeneity of wavelength spectrum at any area where the light lands. Preferentially, a plurality of plants is positioned to receive the near 100% homogenous wavelength spectrum to optimize growing conditions of the plants in the indoor environment. To accomplish this, the system utilizes a plurality of light sources arranged to emit light through a diffusive element. A reflective surface could positioned on a side of the diffusive element to reflect light emitted from the side of the diffusive element and to reflect the light towards the plurality of plants on the second side of the diffusive element. The diffusive element is comprised of a plurality of engraved regions (such as engravings) to scatter the light in various directions.

The lighting system is configured to reduce heat using thermal insulations, heat sinks, and/or liquid cooling system close to the light sources, which are the only heat producers. The diffusive element is not a heat producer and therefore does not need thermal insulations, heat sinks, and/or liquid cooling system.

This technical characteristic, allows the diffusive element, through the light exits the lighting system, to be positioned at an optimal distance from the plants to increase plant yield in the indoor agricultural operation.

The lighting system comprises a mix of different color LED light sources to create a particular spectrum. These lights of different color are mixed through the diffusive element before exit the diffusive element avoiding the need of space between the lighting system and the plants.

The diffusive element covers preferably all the plant area to be lightened avoiding the use of multiple luminaires. This technical characteristic avoids plant areas with more light and other plant areas with less light.

The system provides a nearly homogenous distribution of wavelength spectrum to evenly distribute PAR and thus enhance the quality of light emitted to the plants. This allows the apparatus to be closer to the plants than current lighting systems in the arts to increase the homogeneity of the wavelength spectrum and PAR while reducing spectrum anomalies and without losing any area of coverage of the light emitted.

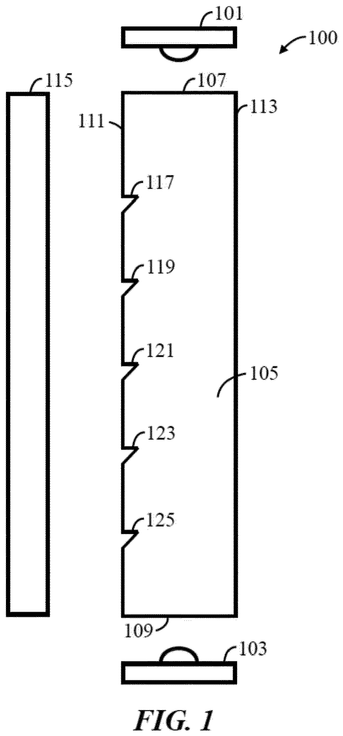

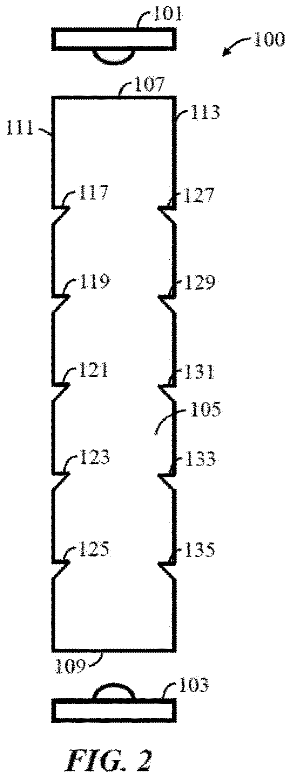

In reference to FIG. 1 and FIG. 2, the lighting apparatus (100) is illustrated in an exemplary embodiment. The lighting apparatus (100) is comprised of a plurality of light sources (101,103) which are positioned proximal to a diffusive element (105). While the light sources (101,103) are illustrated proximal to a first end (107) and a second end (109) of the diffusive element, it is to be understood that a plurality of light sources may be positioned only at the first end (107) or only at the second end (109). An optional reflective element (115) is illustrated positioned proximal to a side, such as the first side (111), of the diffusive element (105) to direct light through the diffusive element towards the plants positioned proximal to the second side (113).

In some embodiments, the reflective element is not utilized. The omission of the reflective element may be useful in an embodiment wherein plants are located in both sides of the diffusive element, or wherein the shape of the diffusive element is such that a reflective element is not needed.

As shown in FIG. 1, the first side (111) of the diffusive element (105) is comprised of engraved regions (117,119,121,123,125) to alter the characteristics of the light emitted from the lighting apparatus (100) and permitting the light to exit the diffusive element (105).

FIG. 2 illustrates an alternative embodiment wherein engraved regions (127,129,131,133,135) are positioned on the second side (113) in addition to engraved regions (117,119,121,123,125) positioned on the first side. It is to be understood that any combinations and any number of engraved regions may be positioned on the first side (111), second side (113), the first end (107) and the second end (109) of the diffusive element. In this embodiment, light exits the diffusive element (105) through the firs side and the second side.

In some embodiments, the reflective element (115) is not utilized such as in the embodiment illustrated in FIG. 2. In such, light is directed through the diffusive element without reflecting the light off the reflective element.

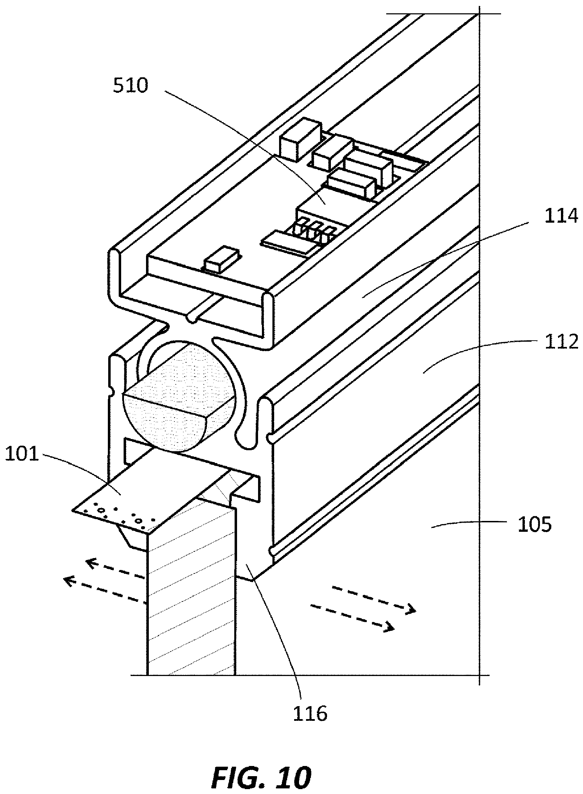

FIG. 10 The lighting apparatus (100) may be provided with a housing (112) to permit mounting of the lighting apparatus in addition to functioning as a cooling element. The housing may comprise means for cooling (114) the heat produced by light sources (101,103). Those means for cooling (114) the heat produced by light sources (101,103) can be passive or active, such as those known in the arts. Further, the housing (112) may be provided with one or more conduits to permit the flow of fluid therethrough. For example, the one or more conduits disposed within the housing may be adapted to allow the flow of water to act as an active means for cooling (114) the heat produced by light sources (101,103). One skilled in the arts will understand that the housing may be formed of various materials, however, a heat conductive material such as aluminum may be useful for forming a heat sink to cool the light sources. Heat dissipation of this lighting system is much easier because is light sources (101,103) are located in line in one or more ends (107,109) of the diffusive element (105).

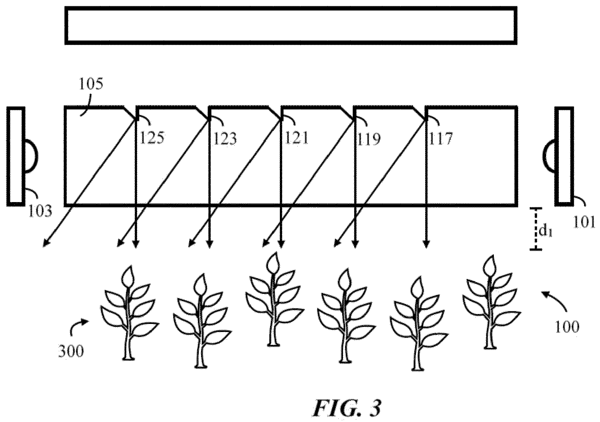

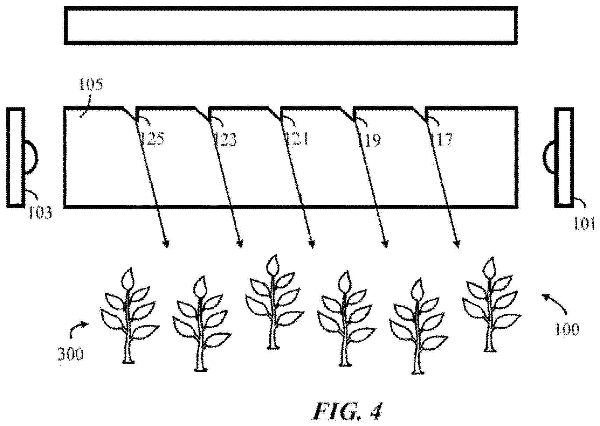

FIG. 3 and FIG. 4 illustrate the environment wherein the lighting apparatus (100) is positioned at a suitable distance (d1) from a plurality of plants (300) arranged to receive light (shown as arrows) emitted from the light sources (101,103) via the diffusive element (105). FIG. 3 and FIG. 4 provide that the emission of light may be altered by the engraved regions (117,119,121,123,125) to emit light in any direction. Light is released towards the reflective material and is reflected back through the diffusive element (105). In such, the user may change or alter the engraved regions (117,119,121,123,125) to maximize efficiency and increase plant yields. For example, it may be effective to mimic the light angle produced by the sun during the natural growing conditions of the plant. Distances between each engraved region (117,119,121,123,125) may be changed to alter light characteristics, including light intensity, etc.

It is preferred that the light exits the diffusive element (105) with an angle of 70º from the surface (almost perpendicular to it).

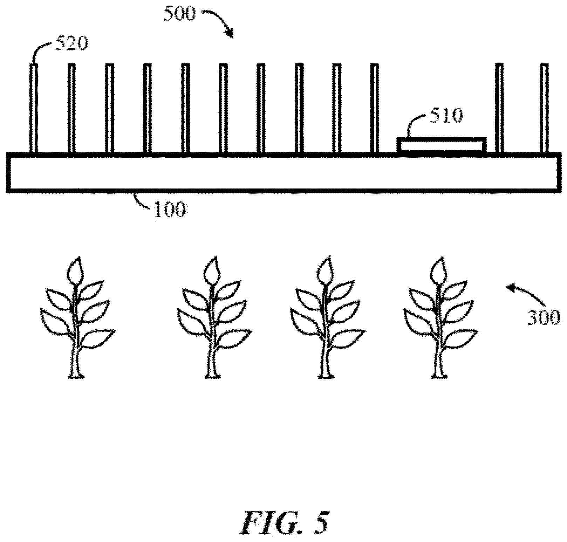

FIG. 5 illustrates the agricultural system (500) comprising the lighting apparatus (100), plants (300), and control system (510). The lighting apparatus (100) is in communication with mounting elements (520), which may be static or dynamic (such as via actuators or moving elements as described herein). The mounting elements (520) maintain the lighting apparatus (100) in a suitable position to provide means for efficiently emitting light to the plants (300). In case the mounting elements (520) are dynamic then are named as means for regulating the distance between the diffusive element (105) and the plurality of plants (300). In an embedment, the control system (510) in electrical communication with the means for regulating the distance can give orders to the means for regulating the distance to change the distance between the diffusive element (105) and the plurality of plants (300).

In some embodiments, the diffusive element (105) is an acrylic, although other diffusive materials may be used, such as glass. Further, the diffusive element (105) may be provided as a light diffusive coating, a light diffusive plastic, and/or light diffusive particles attached or embedded therein. Preferably the diffusive element (105) is a board. However, the shape of the diffusive element (105) may be any geometric shape, bent, curved, or otherwise formed to alter the diffusion of light.

In some embodiments, the acrylic is polymethyl methacrylate, which may provide favorable light diffusion characteristics. The polymethyl methacrylate may be adapted to have various advantages including characteristics such as high impact resistance, lightweight, UV-resistance, sufficient thermal stability, low water absorption, ease of handling, and the ability to form a broad range of thickness.

In some embodiments, each light source may include a plurality of light sources which have the same or different spectral outputs to optimize the wavelength spectrum emitted by the lighting apparatus. Each light source may emit light defined as a source light. In some embodiments, the light sources may include an optic in optical communication with one or more of the plurality of light sources. The optic may be used to combine, direct, or otherwise alter the light emitted by the plurality of light sources in optical communication thereto. Additionally, the optic may adjust one or more characteristics of the light emitted from the plurality of light sources such as by diffusing, concentrating, changing the color or light spectrum, filter, or otherwise alter the emitted light individually or collectively.

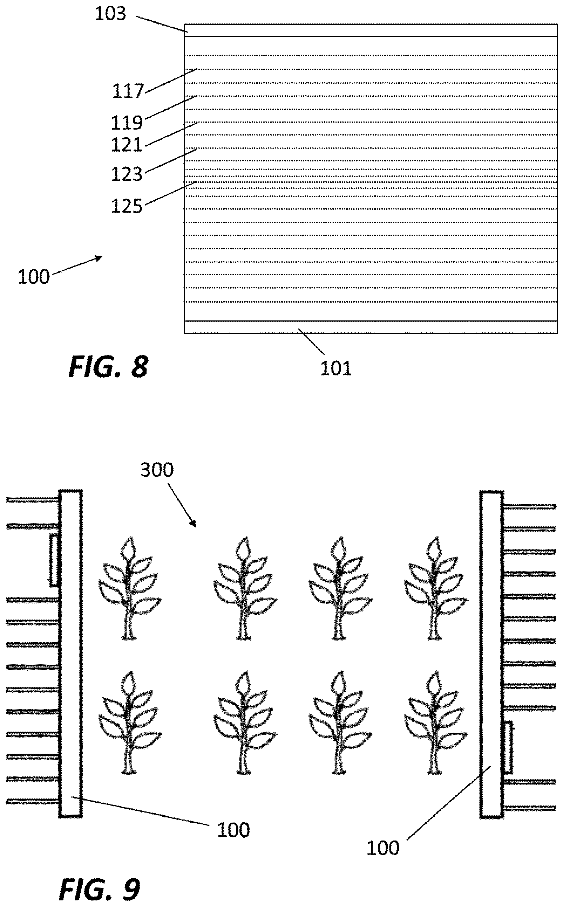

The lighting apparatus may be disposed in various positioned with reference to the plants within the agricultural system. For example, in FIG.3, 4, 5, the diffusive element (105) is parallel to the area of plants, in other words, above the area of plants. For example, in FIG. 9, the diffusive element (105) is perpendicular to the area of plants, in other words, in a lateral side of the area of plants. This embodiment is especially convenient in hydroponics or aeroponics growing systems. Another example (not illustrated) is a diffusive element (105) in a form of a circle or semi-circle around the plant or group of plants to provide a homogenous distribution of light to the plant and optimized light characteristics. In some embodiments, one or more heat sinks and structures equivalent thereto may serve as a means for dissipating heat from the light sources. The heat sinks may include fins to increase the surface area of the heat sink. Alternatively, the heat sink may be formed of any size, configuration, type, or shape of heat sink known in the arts. Preferentially, the heat sink is constructed of a thermally conductive material such as aluminum or copper but may be of any material that effects heat transfer. Active heat sinks may also be employed. The heat sinks allow for the lights to be positioned in an optimal positioned near the plants (300) while avoiding excessive heat transfer to the plants (300). Active heat sinks, such as water-cooling systems are known to be more efficient, than air cooling, and in this application can be used to cool the lights sources as well as the growing environment. In a preferred embodiment, the light sources are out of the area of the plants such that the effect of the heat of the light sources in the plants is diminished. In a more preferred embodiment, the light sources are in another room than the plurality of plants.

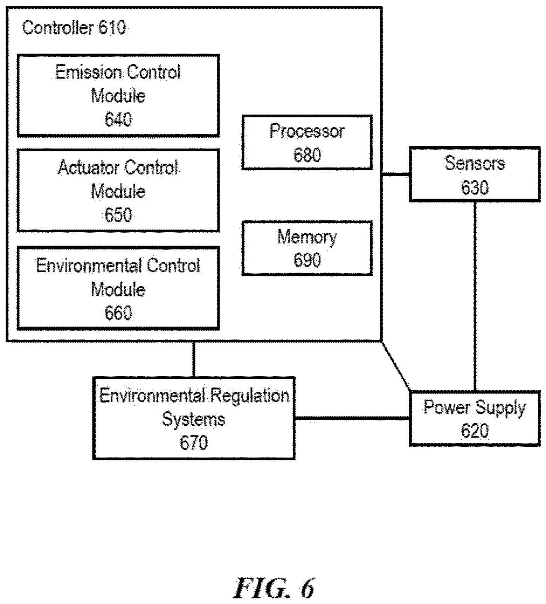

In reference to FIG. 6, the logic components (600) of the lighting system are illustrated in an exemplary embodiment. For example, and without limitation, the logic components (600) may comprise the lighting apparatus (100) in operable communication with a controller (610). A power supply (620) provides power to the logic components (600). One or more sensors (630) may be positioned in an array or as a single sensor within the growing environment to monitor various conditions. The controller (610) may be configured to control the characteristics of the light emitted by the plurality of light sources of the lighting apparatus (100) which may include adjusting the light diffusion, light concentration, changing the color or light spectrum, filtration of light, or otherwise alter the emitted light individually or collectively using an emission control module (640). Further, the controller (610) may operate one or more actuators or motion elements (e.g., electrical, mechanical, or similar motion actuators) to adjust the distance between the diffusive element (105) and the plants, the plurality of light sources and the diffusive element (105), the diffusive element and the reflective element, or any combination thereof using an actuator control module (650). The actuators may alter the intensity, dispersion, or other characteristics of the emitted light.

In further reference to FIG. 6, the controller (610) may comprise an environmental control module (660), which receives signals from each of the plurality of sensors (630). The environmental control module (660) monitors environmental conditions within the environment and may change environmental characteristics by effecting environmental regulation systems (670) therein. The environmental regulation systems (670) may include but are not limited to cooling elements, heating elements, humidifiers, dehumidifiers, and other environmental control systems known in the agricultural arts. The emission control module (640), actuator control module (650), and environmental control module (660) may be implemented as program instructions executed by a processor (680) as recorded in a memory (690).

In some embodiments, the memory (690) may be comprised of a plurality of plant growth protocols selectable by a user. In such, the controller (610) facilitates the automation of the growing process. For example, the controller (610) may be comprised of a timer to turn various components of the logic components (600) ON or OFF throughout the growing process. Suitable operation times may be stored as instructions in the memory (690).

In some embodiments the one or more sensors (630) may include but are not limited to, thermometers, barometers, hygrometers, optical sensors (such as image, video, and infrared capturing elements), spectrometers, infrared sensors, soil moisture sensors, nutrient sensors, infrared gas analyzers (IRGAS), chlorophyll fluorometers, and other sensors known in the agricultural arts.

In some embodiments, the optic is a dynamic optic in operable communication with the controller (610) via the emission control module (640). The emission control module may alter the characteristics of the optic to alter the light intensity, filtration, or other light characteristics. The optic may be positioned to surround or at least partially surround the light source (such as surround the LED). In some embodiments, the optic may include a light diffusing element such as by incorporating a light diffusive coating, a light diffusive plastic, or light diffusive particles attached or embedded therein.

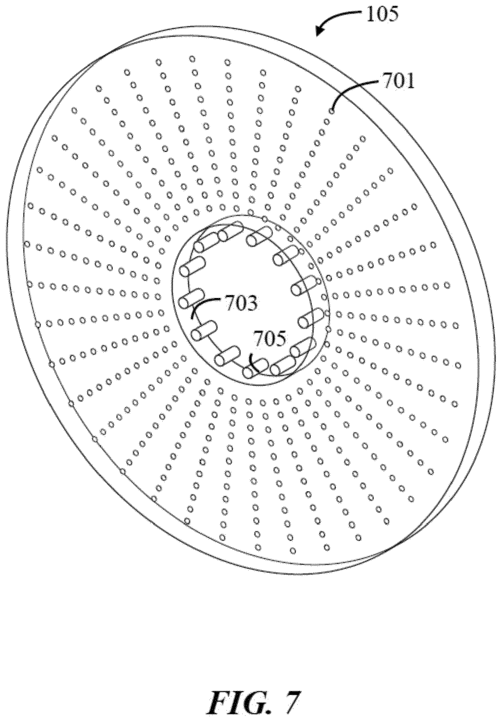

FIG. 7 illustrates an exemplary embodiment of the lighting apparatus (100) having engraved regions (701) provided as a "dot" positioned on the surface of the diffusive element (105). The central light sources (705) are arranged to emit light through the inner edge (703) of the diffusive element (105). A conduit is provided to permit the flow of fluid therethrough to cool the housing of the lighting apparatus (100).

It should be understood that the engraved regions may be provided in various shapes, sizes, and configurations. Further, the engraved regions (701) may be provided on a surface of the diffusive element or embedded within the diffusive element to alter the characteristics of the light emitted therefrom.

For example, engraved regions can be lines or holes (dots) or a combination of lines and holes (dots). It is preferred that the holes (dots) have a circular base or oval base.

Many different embodiments have been disclosed herein, in connection with the above description and the drawings. It will be understood that it would be unduly repetitious and obfuscating to describe and illustrate every combination and subcombination of these embodiments. Accordingly, all embodiments can be combined in any way and/or combination, and the present specification, including the drawings, shall be construed to constitute a complete written description of all combinations and subcombinations of the embodiments described herein, and of the manner and process of making and using them, and shall support claims to any such combination or subcombination.

An equivalent substitution of two or more elements can be made for any one of the elements in the claims below or that a single element can be substituted for two or more elements in a claim. Although elements can be described above as acting in certain combinations and even initially claimed as such, it is to be expressly understood that one or more elements from a claimed combination can in some cases be excised from the combination and that the claimed combination can be directed to a subcombination or variation of a subcombination.

The engraved regions may be distributed on the diffusive element (105) in a homogeneous manner or with different distance to each other. In FIG. 8 a disposition where the distance between adjacent engraved regions (117,119,121,123,125) decreases as the distance to the closest light source (101,103) increase.

The form of the engraved regions may be different depending on the distance to the closest light source. For example, the engraved regions can be deeper or thicker as the distance to the closest light source (101,103) increase.

Also, the engraved regions (117,119,121,123,125) may be embodied in lines parallel to the light sources (101,103), perpendicular to them or combined. The distance in each case may be constant or variable.

If there are more than two light sources (101,103), the engraved regions (117,119,121,123,125) may be made of dots, triangles or other shapes.

It will be appreciated by persons skilled in the art that the present invention is not limited to what has been particularly shown and described hereinabove. A variety of modifications and variations are possible in light of the above teachings without departing from the following claims.

## Claims

1. Indoor agriculture system, comprising
• a plurality of plants (300) and
• a lighting apparatus (100) comprising
∘ a diffusive element (105), and
∘ a plurality of light sources (101,103) arranged to transmit light through a diffusive element (105),
**characterized in that** the diffusive element (105) has a plurality of engraved regions (117,119,121,123,125) at least on a first side (111) while the light sources (101,103) are proximal to at least a first end (107) of the diffusive element (105), such that the light enters the diffusive element (105) by the first end (107) and exits the diffusive element (105) thanks to the engraved regions (117,119,121,123,125) and impacts the plurality of plants (300) positioned next to the diffusive element (105).

2. Indoor agriculture system, according to claim 1, **characterized in that** the lighting apparatus (100) further comprises a housing (112) with the light sources (101,103) and means to fix (116) the housing to the diffusive element (105) such that the light sources (101,103) are proximal to at least a first end (107) of the diffusive element (105).

3. Indoor agriculture system, according to claim 2, **characterized in that** the housing (112) of lighting apparatus (100) comprises means for cooling (114) the heat produced by light sources (101,103).

4. Indoor agriculture system, according to claim 3, **characterized in that** the housing (112) of the light sources (101,103) is made of heat conductive material and the means for cooling (114) the heat produced by light sources (101,103) comprise one or more conduits to permit the flow of fluid therethrough.

5. Indoor agriculture system, according to any of the preceding claims, **characterized in that** the lighting apparatus (100) further comprises means for regulating the distance between the diffusive element (105) and the plurality of plants (300) and a control system (510) in electrical communication with the means for regulating the distance to operate means for regulating the distance to change the distance between the diffusive element (105) and the plurality of plants (300).

6. Indoor agriculture system, according to any of the preceding claims, **characterized in that** the lighting apparatus (100) further comprises a control system (510) in electrical communication with the light sources (101,103) to operate the light sources (101,103) to produce a uniform dispersion of light spectrum.

7. Indoor agriculture system, according to any of the preceding claims, **characterized in that** the distance between adjacent engraved regions (117,119,121,123,125) of the diffusive element (105) decreases as the distance to the closest light source (101,103) increases.

8. Indoor agriculture system, according to any of the preceding claims, **characterized in that** the lighting apparatus (100) further comprises a reflective element (115) on a second side (113) to prevent light exit from the second side (113).

9. Indoor agriculture system, according to any of claims 1-8, **characterized in that** the lighting apparatus (100) further comprises engraved regions (127,129,131,133,135) on a second side (113) opposite of the first side (111).

10. Indoor agriculture system, according to any of the preceding claims, **characterized in that** the diffusive element (105) is perforated by mounting elements (520) to the room.

11. Indoor agriculture system, according to any of the preceding claims, **characterized in that** the diffusive element (105) is translucent.

12. Indoor agriculture system, according to claim 11, **characterized in that** the diffusive element (105) is made of glass or an acrylic material.

13. Indoor agriculture system, according to any of the preceding claims, **characterized in that** the engraved regions (117,119,121,123,125) are made on the diffusive element (105) using a thermal technique or using a mechanical technique.

14. Indoor agriculture system, according to any of the preceding claims, **characterized in that** the diffusive element (105) is parallel or perpendicular to the area of plants.

15. Indoor agriculture system, according to any of the preceding claims, **characterized in that** the light sources are out of the area of the plants.
